# EUROPEAN PATENT APPLICATION

(11) **EP 1 935 547 A1**
(43) Date of publication of application: **25.06.2008**
(21) Application number: 07253646.9
(22) Date of filing: 13.09.2007
(51) Int. Cl.: B23K 9/067, B23K 9/073

(54) **Arc start control method in consumable electrode arc welding**

(30) Priority: 20.12.2006 JP 2006342009
(71) Applicant: Daihen Corporation, Osaka-shi Osaka 532-8512 (JP)
(72) Inventor: Uezono, Toshiro, c/o Daihen Corporation, Osaka-shi Osaka 532-8512 (JP)
(74) Representative: Pluckrose, Anthony William

(57) **Abstract**

An arc start control method is provided for consumable electrode arc welding. According to this method, a welding wire (1), supplied through a welding torch, is brought into contact with a work (2). Then, an initial current is applied to the welding wire (1) and the work (2) that are held in contact with each other. Then, an initial arc is generated by moving the welding wire (1) away from the work (2) with the application of the initial current maintained, and thereafter the initial arc is changed to a steady arc. The initial current is increased gradually with a predetermined increase rate for a predetermined period of time starting at beginning of the application of the initial current.

## Description

### BACKGROUND OF THE INVENTION

### 1. Field of the Invention:

The present invention relates to an arc start control method in consumable electrode arc welding for starting the arc by first bringing a welding wire into contact with a work and then retracting the wire.

### 2. Description of the Related Art:

For starting consumable electrode arc welding, there is a conventionally established arc start control method of bringing the welding wire, which is supplied from a welding torch, into contact with the work thereby applying an initial electric current, and thereafter retracting the welding wire thereby turning on an initial arc and then allowing it to transfer to a steady arc (hereinafter this method is called retraction arc-starting method). The retraction arc-starting method has such advantages over other conventional arc starting methods as: lower rate of failure in arc start, smaller amount of spatters when the arc starts, superior transient responses to the steady arc, and capability to provide superb arc startability. Hereinafter, description will be made for this prior art retraction arc-starting method.

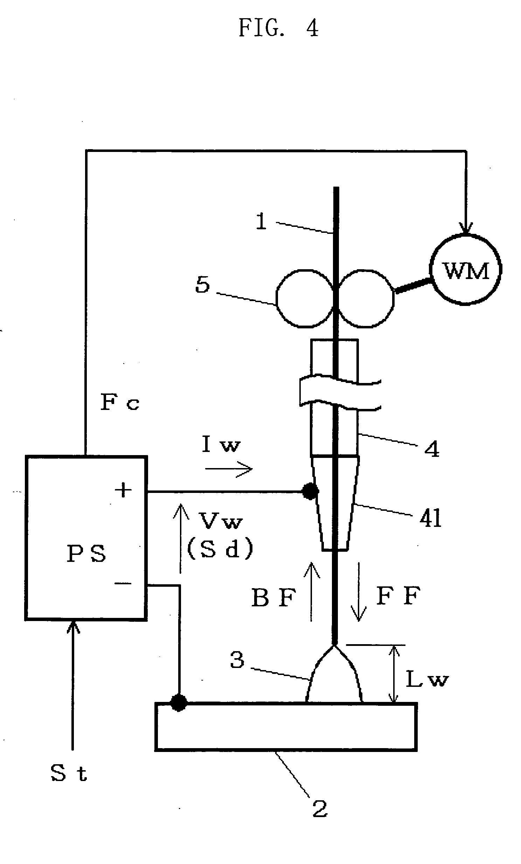

Fig. 4 illustrates the configuration of welding apparatus for performing the conventional retraction arc-starting method.

Upon input of a start signal St from outside, a welding power source PS begins outputting a welding voltage Vw and a welding current Iw for starting an arc, as well as a feed control signal Fc for controlling a feeding operation of a welding wire 1. When contact of the welding wire 1 with a work 2 is detected in the course of arc starting, a contact determination signal Sd in the welding power source assumes High level.

A feed motor WM rotates under a control performed in accordance with the feed control signal Fc. The feed motor WM is coupled with feed rollers 5 which transport the welding wire 1 through a welding torch 4. When the feed motor WM makes normal rotation to move the welding wire 1 closer to the work 2, the feeding operation is called forward feeding, whereas when the feed motor WM makes reverse rotation to move the welding wire 1 away from the work 2, the feeding operation is called backward feeding. The welding wire 1 is supplied with electricity from a power supply chip 41 attached to a tip of the welding torch 4, and generates an arc 3 between itself and the work 2. The distance between the tip of the welding wire 1 and the work 2 is called wire-work distance Lw. While an arc is present, the arc length is represented by this distance.

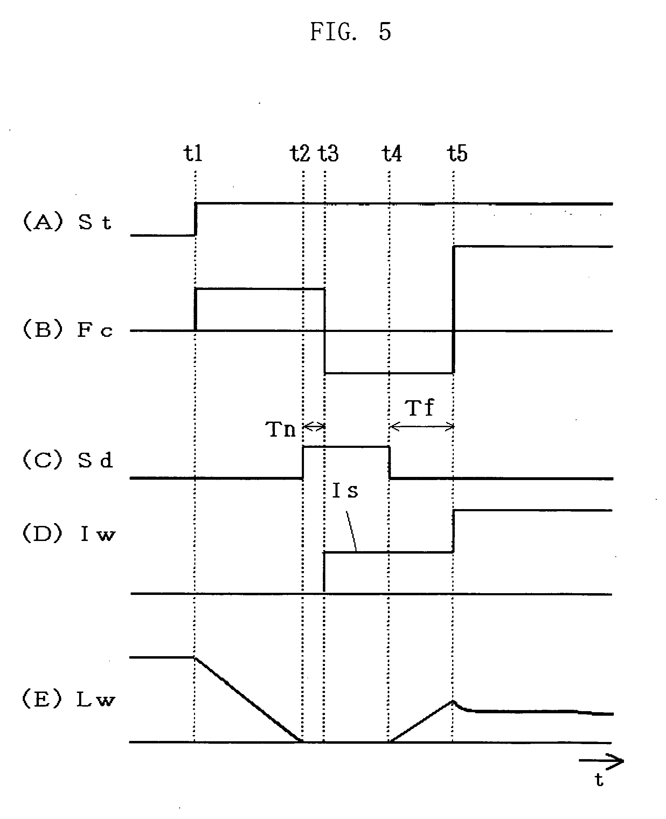

Fig. 5 is a timing chart which shows each of the signals in the above-described welding apparatus being operated by the retraction arc-starting method. Fig. 5(A) shows the start signal St, Fig. 5 (B) shows the feed control signal Fc, Fig. 5 (C) shows the contact determination signal Sd, Fig. 5(D) shows the welding current Iw, and Fig. 5(E) shows the wire-work distance Lw. Hereinafter, description will be made with reference to Fig. 5.

At a time point t1, the start signal St is entered (High level) as shown in Fig. 5 (A), whereupon the feed control signal Fc takes a positive value as shown in Fig. 5(B), and therefore forward feeding of the welding wire 1 is performed at a slow-down feeding speed. As a note, forward feeding is performed when the feed control signal Fc has a positive value whereas backward feeding is performed when the value is negative. As shown in Fig. 5 (E), the wire-work distance Lw becomes increasingly shorter due to the forward feeding.

At a time point t2, as shown in Fig. 5(E), the wire-work distance Lw becomes 0 mm, and the tip of the welding wire 1 makes contact with the work 2, whereupon the contact determination signal Sd assumes High level as shown in Fig. 5 (C). After a lapse of a predetermined on-delay period Tn from this contact-determination moment, i.e. at a time point t3, the feed control signal Fc changes to have a negative value as shown in Fig. 5(B), and thus backward feeding of the welding wire 1 is performed at a backward feeding speed. Simultaneously, a predetermined initial current Is is applied as shown in Fig. 5 (D).

As shown in Fig. 5 (E), in this backward feeding, the tip of the welding wire 1 is pulled off the work 2, and the wire-work distance Lw now has a small value (time point t4), whereupon an initial arc takes place, with an initial current Is passing through the arc. Also, since the welding wire 1 loses contact with the work 2 at the time point t4, the contact determination signal Sd changes to Low level.

During the period from the time point t4 when the contact determination signal Sd changed to Low level to a time point t5 when a predetermined off-delay period Tf elapses, the feed control signal Fc remains negative as shown in Fig. 5 (B), so the backward feeding is continued. As a result, as shown in Fig. 5 (E), the arc length of the initial arc (the wire-work distance Lw) becomes increasingly longer.

At the time point t5, i. e. upon a lapse of the off-delay period Tf, the feed control signal Fc changes to have a positive value as shown in Fig. 5(B), and therefore forward feeding of the welding wire 1 is resumed at a steady feeding speed. In response to this, the initial current Is changes to a steady welding current as shown in Fig. 5 (D), the arc length becomes steady as shown in Fig. 5 (E), and the arc transfers from an initial arc to a steady arc. As described, the welding wire 1 is brought to contact with and then pulled off the work 2. This makes it possible to produce an initial arc reliably, allowing the arc to transfer to a steady arc, thereby achieving superb arc startability (See Patent Documents 1 and 2 for example).

Patent Document 1: JP-A-2002-248572

Patent Document 2: JP-B-3836872

In Fig. 5, forward feeding is continued and application of the initial current Is is not performed during the on-delay period Tn after the welding wire 1 has made contact at the time point t2. This is to make sure the contact of the welding wire 1. If the contact is insufficient, there occurs a flash of arc (referred to as "instantaneous arc" below) at the time point t3 upon the application of the initial current Is. This phenomenon causes undesired depositions, which leads to arc start failure.

The initial current Is is usually set to a value within a range of 50 through 100A for the sake of initial-arc stability. In view of preventing instantaneous arcing and resulting deposition, however, a smaller initial current Is is desirable, yet a smaller initial current Is makes the initial arc unstable and can lead to arc interruption. These two factors are taken into consideration to establish the range of values mentioned above.

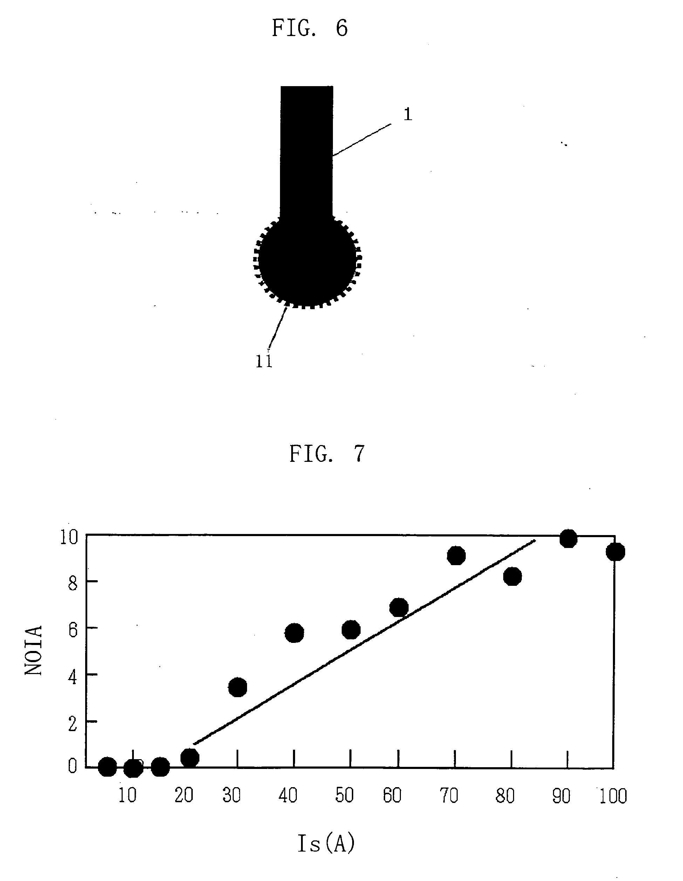

Fig. 6 illustrates a tip of a welding wire 1 upon completion of welding. The tip of the welding wire 1 is global, and has a lower surface formed with a thin insulation layer 11. The thin insulation layer 11 is formed from components of the welding wire 1. Therefore, there are certain kinds of the welding wire 1 which have a high tendency to form the thin insulation layer 11. For example, a welding wire 1 made of stainless steel has a high tendency to form the thin insulation layer 11. Different welding conditions also play a part in the formation of thin insulation layer 11. The thin insulation layer 11 takes a mottled pattern on the lower surface of the ball, so that contact with the work 2 does not usually result in total insulation but in a large resistance, rather. If the tip of the wire which is formed with these mottles of thin insulation layer 11 as described makes contact with the work 2, and an initial current Is is applied, the initial current Is concentrates on the conductive parts not covered by the thin insulation layer 11. As a result, those parts which are in contact and receiving concentrated current will heat up and can melt quickly, forming a tiny gap for instantaneous arcing to occur, which leads to deposition. Note, however, that formation of the thin insulation layer 11 does not always lead to instantaneous arcing and deposition. The scenario depends upon the state of formation of the thin insulation layer 11, the value of initial current Is, the state of contact, and so on.

Fig. 7 shows a result of experiment: Here, the above-described retraction arc starting was attempted, using a stainless steel wire and with different values of the initial current Is, and the number of instantaneous arcing events was recorded. The arc start was attempted twenty times for each value of the initial current. The vertical axis of the graph represents the number of instantaneous arcing observed. As will be clear from the figure, the instantaneous arc count is zero when the initial current Is has a value not greater than 20 A, and the count increases proportionally to the value in the range over 20 A. In a range of 50A through 100A, which is the range commonly used for the initial current Is as described above, instantaneous arcing occurs at least five times in twenty attempts, or with a probability of 5/20=25%. Not all of the instantaneous arc events lead to deposition, yet the experiment indicates high likelihood for deposition. Since deposition will lead to an arc start failure, it is necessary to lower the probability for instantaneous arcing.

### SUMMARY OF THE INVENTION

The present invention has been proposed under the circumstances described above. It is therefore an object of the present invention to provide an arc start control method in consumable electrode arc welding, which is capable of offering superb arc startabilty, without resulting in deposition even when a thin insulation layer is present on the wire tip.

In order to solve the above-described problem, a first invention provides an arc start control method in consumable electrode arc welding, including a welding start procedure of bringing a welding wire supplied from a welding torch into contact with a work to apply an initial current and then retracting the welding wire thereby producing and transferring an initial arc to a steady arc. In this procedure,
the initial current has a gradient in its rising edge.

A second invention is the arc start control method in consumable electrode arc welding according to the first invention, where application of the initial current is started after a lapse of a predetermined time from a time of the contact.

A third invention is the arc start control method in consumable electrode arc welding according to the first or the second invention, where the gradient in the initial current is not greater than 20 A/ms.

According to the present invention, the initial current is applied so as to rise in a gradient, and this makes it possible to remove the thin insulation layer formed on the wire tip, thereby decreasing the contact resistance. This reduces the probability of instantaneous arcing which would lead to deposition when the initial current is applied. As a result, superb arc startability is achieved.

### BRIEF DESCRIPTION OF THE DRAWINGS

Fig. 1 is a block diagram illustrating a welding power source used for carrying out an arc start control method in consumable electrode arc welding according to the present invention.
Fig. 2 is a timing chart illustrating various signals used in the arc start control method of the present invention.
Fig. 3 is a graph illustrating the appropriate range of the increase rate or gradient of the initial welding current.
Fig. 4 illustrates the configuration of welding apparatus used for carrying out the conventional arc start control method.
Fig. 5 is a timing chart illustrating the conventional arc start control method.
Fig. 6 illustrates a thin insulating layer formed at the tip of a welding wire due to the welding.
Fig. 7 is a graph showing the relation between the initial welding current Is and the number of instantaneous arcs having occurred.

### DETAILED DESCRIPTION OF THE PREFERRED EMBODIMENTS

An embodiment of the present invention will be described below with reference to the drawings.

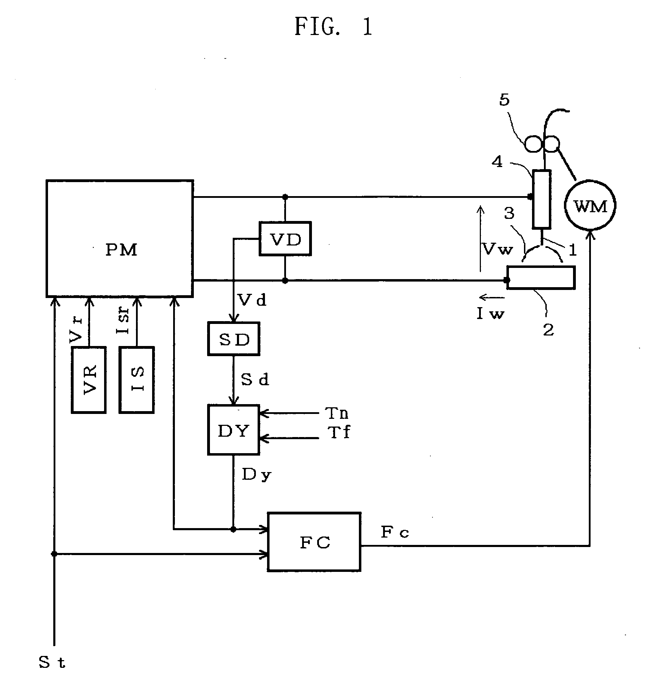

Fig. 1 is a block diagram of a welding power source PS for implementing an arc start control method in consumable electrode arc welding according to the present invention. The present invention uses welding apparatus similar to the conventional one described above with reference to Fig. 4, but differs in that the conventional power source PS is replaced by the one shown in Fig. 1.

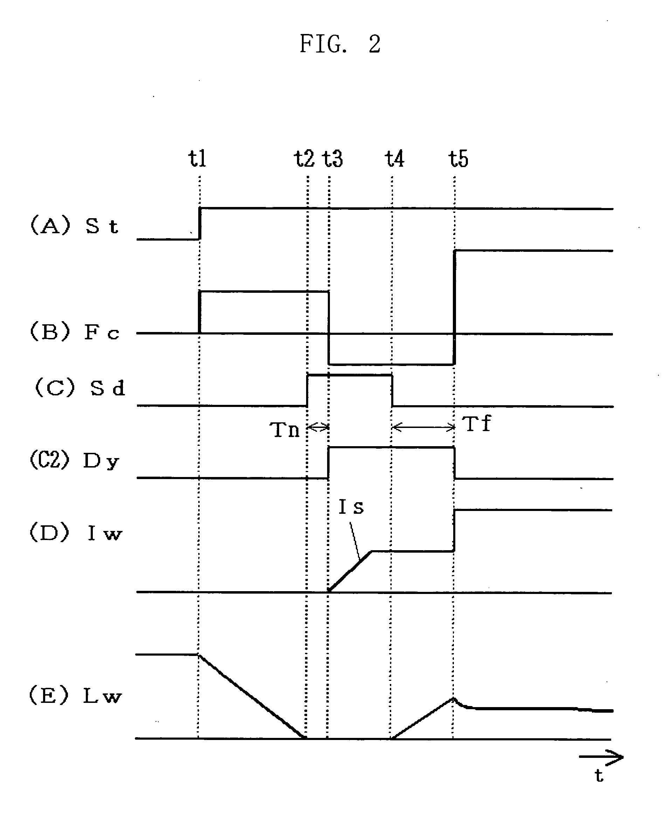

Specifically, a voltage setting circuit VR outputs a predetermined voltage setting signal Vr. An initial current setting circuit IS outputs a predetermined initial current setting signal Isr. A power source main circuit PM receives commercial power such as three-phase 200 volts as an input, performs an output control such as inverter control based on the voltage setting signal Vr when a start signal St is in High level, and outputs a welding voltage Vw and a welding current Iw. Therefore, the power source main circuit PM makes outputs of a constant-voltage characteristic as do other conventional welding power sources for consumable electrode arc welding. However, as will be described later with reference to Fig. 2, the output will have a constant-current characteristic based on the initial current setting signal Isr, for a predetermined period (from time point t1 to time point t5) until a delay signal Dy, to be described later, changes from High level to Low level.

The welding wire 1 is supplied through a welding torch 4 by feed rollers 5 which are coupled with a feed motor WM. An arc 3 is produced between the wire 1 and the work 2.

A voltage detection circuit VD detects the welding voltage Vw, and outputs a voltage detection signal Vd. Based on the value of voltage detection signal Vd, a contact determination circuit SD determines whether or not the welding wire 1 has come into contact with the work 2, and outputs a contact determination signal Sd. A delay circuit DY receives the contact determination signal Sd as an input, and outputs a delay signal Dy which has a predetermined on-delay period defined by an on-delay setting value Tn and an off-delay period defined by an off-delay setting value Tf. A feed control circuit FC receives the start signal St and the delay signal Dy as inputs, and outputs a feed control signal Fc which will be described later with reference to Fig. 2. Rotation of a feed motor WM is controlled in accordance with the feed control signal Fc.

Fig. 2 is a timing chart for the signals in the above-described welding power source performing a retraction arc-starting method according to the present invention. Fig. 2 (A) shows the start signal St, Fig. 2 (B) shows the feed control signal Fc, Fig. 2(C) shows the contact determination signal Sd, Fig. 2(C2) shows the delay signal Dy, and Fig. 2(D) shows the welding current Iw. Fig. 2 (E) shows the distance Lw between the wire and the work. It should be noted that Fig. 2 corresponds to Fig. 5, but includes an additional signal, i.e. the delay signal Dy (see the one indicated by (C2)).

At a time point t1, the start signal St is entered (High level) as shown in Fig. 2 (A), whereupon the feed control signal Fc takes a positive value as shown in Fig. 2(B), and therefore forward feeding of the welding wire 1 is performed at a slow-down feeding speed. Forward feeding is performed when the feed control signal Fc has a positive value, whereas backward feeding is performed when the value is negative. As shown in Fig. 2 (E), the wire-work distance Lw becomes shorter due to the forward feeding.

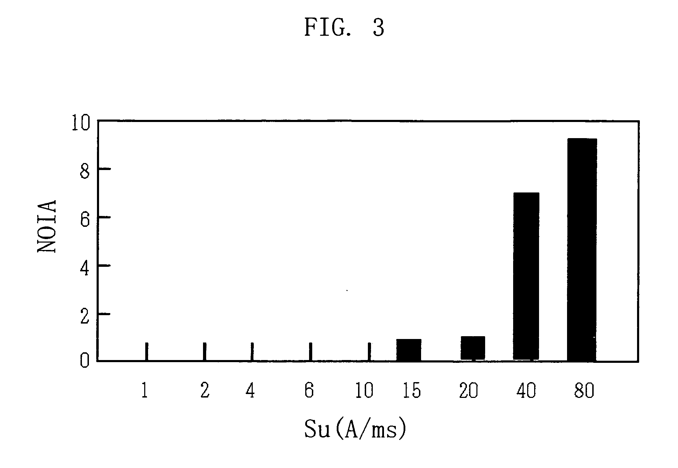

At a time point t2, as shown in Fig. 2(E), the wire-work distance Lw becomes 0 mm, and the tip of the welding wire 1 makes contact with the work 2, whereupon the contact determination signal Sd assumes High level as shown in Fig. 2 (C). After a lapse of a predetermined on-delay period Tn from this contact-determination moment, i.e. at a time point t3, the delay signal Dy changes to High level as shown in Fig. 2(C2). In response to this, the feed control signal Fc changes to have a negative value, and thus backward feeding of the welding wire 1 is performed at a backward feeding speed. Simultaneously, a predetermined initial current Is is applied as shown in Fig. 2 (D), and then increased in a sloped pattern before assuming a predetermined value (approximately 50 through 100A). In this process, as has been described with reference to Fig. 6, it is probable that the wire tip is mottled with a thin insulation layer 11. Even so, however, there will not be instantaneous arcing because the initial current Is is not applied at a full value from the onset, but is applied in a sloped pattern. So, the heated wire tip does not melt too quickly, therefore does not produce a gap, and therefore does not give rise to an instantaneous arc. In other words, since the initial current Is has a gradient, the wire tip is heated gradually, and the thin insulation layer 11 is removed gradually by this heat. As a result, the contact resistance between the wire tip and the work 2 becomes small, which eliminates a chance for instantaneous arcing and deposition that would follow. In addition, since the current is maintained at a predetermined value after the rise, there is no adverse affect to the stability of the initial arc. Appropriate values for the gradient will be described later with reference to Fig. 3.

As shown in Fig. 2 (E), during the backward feeding, the tip of the welding wire 1 is pulled off the work 2, and the wire-work distance Lw now has a small value (time point t4), whereupon an initial arc takes place, passed by an initial current Is. Also, since the welding wire 1 loses contact with the work 2 at the time point t4, the contact determination signal Sd changes to Low level.

During the period from the time point t4 when the contact determination signal Sd changed to Low level to a time point t5 when a predetermined off-delay period Tf elapses, the delay signal Dy changes to Low level as shown in fig. 2 (C2). The feed control signal Fc remains negative as shown in Fig. 2 (B) during the period from the time point t4 through the time point t5, so the backward feeding is continued. As a result, as shown in Fig. 2 (E), the arc length of the initial arc (the wire-work distance Lw) becomes increasingly longer.

At the time point t5, the delay signal Dy changes to Low level as shown in Fig. 2(C2), whereupon the feed control signal Fc changes to have a positive value as shown in Fig. 2(B), and therefore forward feeding of the welding wire 1 is resumed at a steady feeding speed. In response to this, the initial current Is changes to a steady welding current as shown in Fig. 2(D), the arc length becomes steady as shown in Fig. 2(E), and the arc transfers from an initial arc to a steady arc.

The arrangement in Fig. 2 need not necessarily include an on-delay, i.e. the setting for the on-delay period may be Tn=0. In this case, backward feeding of the welding wire 1 and application of the initial current Is are started at the time point t2. Even if the forward feeding is stopped simultaneously with contact determination, inertia produces a situation which is equivalent to a case where the forward feeding is continued.

Fig. 3 shows appropriate values for an increase rate or gradient Su (Ampere/millisecond) of the initial current. The horizontal axis of the figure represents the gradient Su of the initial current while the vertical axis represents the number of times instantaneous arcing was observed. The figure shows a case where a retraction arc start according to the present invention was attempted, using a stainless steel wire, with the predetermined value of initial current Is being 70A. The arc start was attempted fifty times for each of the gradients Su, and instantaneous arcing was counted.

As is clear from Fig. 3, there is a drastic drop in the count if the gradient Su ≤20 A/ms. Further, the count comes to zero if the gradient Su ≤10 A/ms. In the example described with reference to Fig. 2, the time of contact during which the initial current Is is applied (the period t3-t4) is at least a few tens of milliseconds, which means that it will only take 3.5 ms to complete the gradient before attaining the predetermined value, with a setting for the gradient Su=20 A/ms and a setting for the predetermined value being 50 A. Hence, by the time when the initial arc occurs (time point t4), the initial current Is has already attained the predetermined value 50A. On the other hand, a minimum value of the gradient Su can be 4 A/ms, when the length of period t3-t4 is 25ms, and the predetermined value is 100A. Fig. 3 shows a case of stainless steel wire which has a strong tendency to form a thin insulation layer. The figure indicates that any gradient Su not grater than 20 A/ms is preferable, and a gradient not greater than 10 A/ms is more desirable.

In Fig. 2, the contact between the welding wire 1 and the work 2 during the period t1-t2 is maintained by forward feeding of the welding wire 1. As another method, the welding torch 4 may be advanced to bring the welding wire 1 into contact. In this operation, forward feeding of the welding wire 1 may be made or may be stopped; whichever is acceptable. Likewise, in place of backward feeding of the welding wire 1 to pull the welding wire 1 off the work 2, the welding torch 4 may be retracted in the period t3-t5. In this operation, the welding wire 1 may be in whichever state of forward feeding, stopped and backward feeding. Further, there is no need for the gradient of the initial current Is to be a straight slope, but the gradient may be curvy, stepped, and so on.

According to the embodiment described thus far above, the initial current is applied so as to rise in a gradient. This makes possible to remove a thin insulation layer formed on wire tip and to decrease the contact resistance value. With this arrangement, instantaneous arcing and resulting deposition are less likely to occur when an initial current is applied, and as a result, superb arc startability can be achieved.

## Claims

1. An arc start control method in consumable electrode arc welding, the method comprising:
bringing a welding wire into contact with a work, the welding wire being supplied through a welding torch;
applying an initial current to the welding wire and the work held in contact with each other;
generating an initial arc by moving the welding wire away from the work with the application of the initial current maintained; and
changing the initial arc to a steady arc;
wherein the initial current is increased gradually with a predetermined increase rate for a predetermined period of time starting at beginning of the application of the initial current.

2. The method according to claim 1, wherein the increase rate of the initial current is no greater than 20 A/ms.

3. The method according to claim 1, wherein the application of the initial current is started after a predetermined delay time lapses, the delay time starting at an instant when the welding wire comes into contact with the work.

4. The method according to claim 3, wherein the increase rate of the initial current is no greater than 20 A/ms.
